# FASCICULE DE BREVET EUROPEEN

(11) **EP 0 506 542 B1**
(45) Date de publication et mention de la délivrance du brevet: **26.04.1995**
(21) Numéro de dépôt: 92400789.1
(22) Date de dépôt: 24.03.1992
(51) Int. Cl.: B60S 1/38

(54) **Déflecteur d'air à ailerons, notamment pour véhicule automobile**
Lamellenluftleitblech, insbesondere für Kraftfahrzeuge
Finned air deflector, in particular for motor vehicles

(30) Priorité: 29.03.1991 FR 9103843
(43) Date de publication de la demande: 30.09.1992
(73) Titulaire: VALEO SYSTEMES D'ESSUYAGE, 78180 Montigny-Le-Bretonneux (FR)
(72) Inventeur: Roumegoux, Jean-Louis, F-75116 Paris (FR)
(74) Mandataire: Gamonal, Didier

(56) Documents cités:
- DE-U- 8 518 515
- FR-A- 2 556 297
- FR-A- 2 594 083
- FR-A- 2 621 288
- US-A- 4 628 565

## Description

La présente invention se rapporte à un déflecteur d'air à ailerons, notamment pour essuie-glace de véhicule automobile.

Un déflecteur d'air est habituellement utilisé en liaison avec un essuie-glace, constitué généralement d'un bras d'essuie-glace portant à articulation un balai d'essuie-glace comportant une monture porteuse d'une lame d'essuie-glace apte à venir frotter sur une surface vitrée, telle gu'un pare-brise de véhicule automobile.

On sait que l'écoulement de l'air sur le parebrise a tendance à provoguer le soulèvement du balai d'essuie-glace et cela malgré les moyens de rappel élastiques normalement prévus pour appliquer le balai sur la surface à essuyer, ce phénomène étant d'autant plus grave que la vitesse du véhicule qui porte l'essuie-glace est élevée.

Le déflecteur d'air a pour but, généralement, de dévier les flux d'air frappant ledit balai de manière à éviter son décollement, décollement qui laisse intacte une pellicule d'eau sur la surface à essuyer et qui gêne la visibilité du conducteur.

Il est connu notamment par le document FR-A-2 556 297, de réaliser un deflecteur d'air disposé sur le balai ou sur le bras d'essuie-glace pour créer un effet aérodynamique tendant à appliquer l'essuie-glace contre la surface à essuyer et cela même à vitesse élevée.

Ce déflecteur présente des moyens d'accrochage sur le bras ou le balai et une partie déflectrice profilée de forme généralement convexe tournée vers la surface à essuyer de manière à développer une force qui tende à pousser le balai d'essuie-glace vers la surface à essuyer.

Cette partie déflectrice profilée présente une courbure moyenne permettant de procurer une efficacité maximale au déflecteur dans une certaine plage de vitesse du véhicule.

La demanderesse a constate que, en dehors de cette plage, le déflecteur avait une efficacité moindre qui pouvait entraîner une qualité d'essuyage de la surface vitrée insuffisante.

Pour cela, l'invention concerne plus particulièrement un déflecteur d'air comportant une partie déflectrice dont l'efficacité peut évoluer en fonction de la vitesse du véhicule.

Selon l'invention, un déflecteur d'air pour un essuie-glace constitué d'un bras portant à articulation un balai d'essuie-glace apte à essuyer une surface vitrée ledit déflecteur étant constitué d'une partie déflectrice destinée à générer un effet de sol par dépression entre le déflecteur et la surface vitrée et de moyens de liaison et/ou de fixation sur le balai d'essuie-glace et/ou le bras (Déflecteur du type divulgué, par exemple, dans FR-A-2 621 288), est caractérisé en ce que la partie déflectrice se compose au moins de deux ailerons successifs dont l'un au moins est mobile et en ce que les ailerons s'étendent longitudinalement suivant la direction du balai en se faisant suite entre l'extrémité libre de la partie déflectrice et les moyens de liaison et/ou de fixation de manière à faire varier l'effet de sol que génère le déflecteur d'air.

Grâce à l'invention, la courbure générale de la partie déflectrice peut évoluer en fonction de la vitesse du véhicule ce qui ne peut que procurer une bonne efficacité de ce déflecteur et cela à toutes les vitesses du véhicule. (Différents modes de réalisation l'invention sont précisés dans les revendications 2 à 10 dépendantes)

Les autres caractéristiques et avantages de l'invention vont ressortir maintenant de la description qui va suivre en se référant aux dessins annexés sur lesquels :
- la figure 1 montre une vue en perspective d'un déflecteur d'air suivant la présente invention ;
- la figure 2 montre une vue partielle en coupe selon la ligne AA de la figure 1 ;
- la figure 3 montre une vue partielle en coupe selon la ligne BB de la figure 1 ;
- la figure 4 est une vue partielle en coupe transversale montrant une première variante de réalisation de l'invention ;
- la figure 5 est une vue partielle en coupe transversale montrant une deuxième variante de l'invention ;
- la figure 6 est une vue partielle en coupe transversale montrant une troisième variante de l'invention.

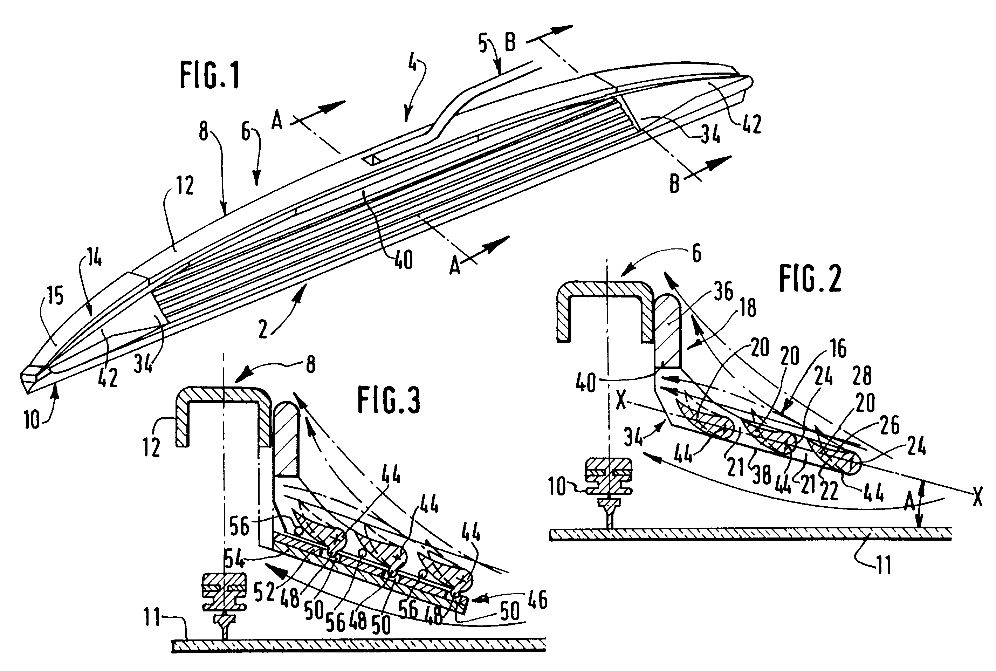

En se référant à la figure 1, un déflecteur d'air 2 est apte à être porté par un dispositif d'essuie-glace 4.

Le dispositif d'essuie-glace est généralement constitué de deux éléments principaux, l'un de ces éléments est un bras d'essuie-glace 5 portant à articulation un balai d'essuie-glace 6 apte à essuyer une surface vitrée, telle qu'un pare-brise de véhicule automobile.

Le balai d'essuie-glace est constitué, d'une manière connue en soi, d'une monture porteuse 8 et d'une lame d'essuie-glace 10 qui frotte sur une surface vitrêe 11 (figure 2).

Egalement de manière connue en soi, la monture porteuse 8 est constituée d'un étrier principal 12 de forme générale cintrée et présentant en section un profil de U inversé (figure 2), cet étrier principal portant à articulation, à au moins une de ses extrémités, un système de palonniers dont les palonniers terminaux portent la lame d'essuie-glace 10.

Dans le cas de la figure 1, le déflecteur d'air 2 est porté par l'un des éléments du dispositif d'essuie-glace, ici le balai 6, mais il peut être envisagé que ce déflecteur soit porté par le bras d'essuie-glace 5 ou conjointement par le bras et le balai.

Dans la suite de la description il sera fait mention à un déflecteur d'air 2 porté uniquement par le balai d'essuie-glace et cela pour des raisons de simplification.

En se référant conjointement à la figure 2, le déflecteur d'air 2 présente une partie déflectrice 16 et des moyens de liaison et/ou de fixation 18 sur le balai d'essuie-glace 6, la partie déflectrice et les moyens de liaison et/ou de fixation formant le déflecteur.

La partie déflectrice 16 du déflecteur 2 se compose de plusieurs ailerons 20 se faisant suite les uns avec les autres selon une même direction XX en laissant subsister entre eux un espace libre 21 dont le rôle sera explicité par la suite.

Comme visible sur la figure 2, la direction XX est une direction sensiblement rectiligne inclinée formant un angle A avec la surface vitrée 11.

Plus particulièrement, il est prévu au moins deux ailerons 20, ici trois ailerons, présentant en section une forme sensiblement convexe tournée vers la surface à essuyer 11.

L'aileron 20 comporte sur sa surface interne 22, celle en regard de la surface vitrée 11, une zone courbe s'étendant depuis un bord avant 24 de l'aileron vers l'arrière, c'est-à-dire en direction du balai d'essuie-glace, le bord avant étant, en section, de forme sensiblement semi-cylindrique.

La surface externe 26 de l'aileron 20 présente également une zone courbe issue du bord avant 24 et venant rejoindre le bord arrière de la zone courbe de la surface interne 22 en formant un bec 28 avec cette dernière.

Ainsi, chaque aileron profilé a un profil en forme d'aileron d'avion inversé ce qui est le profil idéal au point de vue aérodynamique et qui génère un effet de sol entre la surface interne 22 de chaque aileron 20 et la surface vitrée 11.

Bien entendu, et cela sans sortir du cadre de l'invention, chaque aileron peut avoir toute autre forme possible telle que celle décrite dans la demande de brevet FR-A-26 21 288 dans laquelle les différentes zones courbes ont été remplacées par des surfaces planes.

Ainsi, l'aileron 20 présente une épaisseur diminuant progressivement à partir du bord avant 24 vers le bec 28.

Préférentiellement, les courbures des deux surfaces 22 et 26 sont différentes mais de même direction et comme il peut être vu à la figure 2, l'angle moyen de la surface interne 22 forme un angle plus grand que l'angle A précédemment décrit alors que l'angle moyen de la surface externe 26 forme un angle égal ou supérieur à l'angle A.

De plus, comme mieux visible sur la figure 2, le bec 28 d'un aileron 20 se trouve à distance du bord avant 24 d'un aileron qui le précède de manière à laisser subsister un espace libre 21 entre deux ailerons successifs.

Les ailerons 20 s'étendent tout au long de la majeure partie de la direction longitudinale du balai et sont élaborés préférentiellement à partir d'une matière plastique rigide en étant portés à articulation à leurs extrémités longitudinales par une pièce de support 34.

Cette pièce de support, qui est prévue à chaque extrémité des ailerons 20, présente en section une forme générale de L dont la branche verticale 36 du L est reliée au balai d'essuie-glace et dont la branche horizontale 38 de ce L présente une inclinaison par rapport à la surface vitrée 11 sensiblement égale à l'angle A précédemment décrit.

De préférence, comme visible sur la figure 1, chaque branche verticale du L des pièces de support disposées aux extrémités des ailerons 20 sont reliées entre elles par une traverse 40 s'étendant sensiblement en correspondance avec la direction longitudinale du balai 6 en reliant les deux extrémités des branches verticales du L.

Ainsi, les différents ailerons 20 sont supportés par une pièce de configuration en U inversé dont la base du U, constituée par la traverse 40, sert de moyen de liaison et de fixation et dont les branches verticales de ce U, constituées par les pièces de support 34, servent de moyen de support à articulation des ailerons 20.

Bien entendu, il peut être prévu que les pièces de support 34 soient fixées directement sur le balai et dans ce cas ce sont ces pièces de support qui servent de moyens de liaison et/ou de fixation du déflecteur.

Grâce à cette disposition, le flux d'air venant balayer la partie déflectrice 16 du déflecteur, comme représenté sur la figure 2 par les différentes flèches, procure une multiplicité d'effets de sol au niveau de chaque aileron en améliorant ainsi grandement l'efficacité de ce déflecteur.

Avantageusement et comme cela est représenté sur la figure 1, les pièces de support 34 peuvent se poursuivre en direction des extrémités libres de la lame d'essuie-glace 10 par une partie déflectrice 42 qui ne pourra qu'améliorer le fonctionnement du système.

Avantageusement chaque aileron 20 peut pivoter chacun autour d'un axe 44, disposé longitudinalement au niveau du bord avant 24 de chaque aileron en ayant un mouvement de pivotement limité autour de cet axe mais il peut être envisagé et cela sans sortir du cadre de l'invention que certains ailerons 20 soient fixes et qu'au moins un aileron 20 soit mobile par rapport aux autres ailerons fixes, ces ailerons fixes étant immobiles sur les pièces de support 34 en étant par exemple élaborés en une seule pièce avec celles-ci.

Sur la figure 2, il est indiqué que l'axe de pivotement est prévu au niveau du bord avant mais il peut être prévu, et cela sans sortir du cadre de l'invention, que l'axe de pivotement soit prévu soit en partie arrière de ces ailerons soit en partie médiane.

Grâce à cette disposition, il est possible de faire varier l'inclinaison de chaque aileron par rapport à la surface vitrée 11 et ainsi moduler l'effet de portance que génère chaque aileron tout en modulant également la traînée que procure cette partie déflectrice en faisant varier la dimension selon l'axe XX des espaces libres 21, ce qui permet en final de faire varier l'effet de sol que génère chaque aileron.

En se référant à la figure 3, il peut être vu que ces ailerons comportent un moyen de commande 46 dépendant des paramètres de fonctionnement du véhicule et permettant de faire pivoter les différents ailerons autour de leurs axes 44.

Pour faire pivoter les ailerons 20, il est prévu sur chaque aileron 20 un doigt 48 saillant à partir de la surface interne 22 vers la surface vitrée 11 et venant coopérer avec une ouverture 50 portée par une glissière 52 supportée par un flasque 54.

Comme cela est montré à la figure 3 en traits mixtes interrompus, le flasque 54 peut être issu directement de la monture porteuse 8 et plus particulièrement de l'étrier principal 12 et, dans l'exemple décrit, ce flasque est porté par l'une au moins des pièces de support 34.

Préférentiellement et comme cela est visible sur la figure 3, il est prévu un moyen de butée en rotation 56 interdisant le pivotement des ailerons 20 en direction de la surface vitrée 11 et autorisant uniquement un débattement en pivotement de ces ailerons dans une direction opposée à celle de la surface vitrée.

Bien entendu, il peut être prévu que les ouvertures 50 soient de longueurs différentes selon l'axe XX pour permettre un pivotement différentiel des ailerons les uns par rapport aux autres.

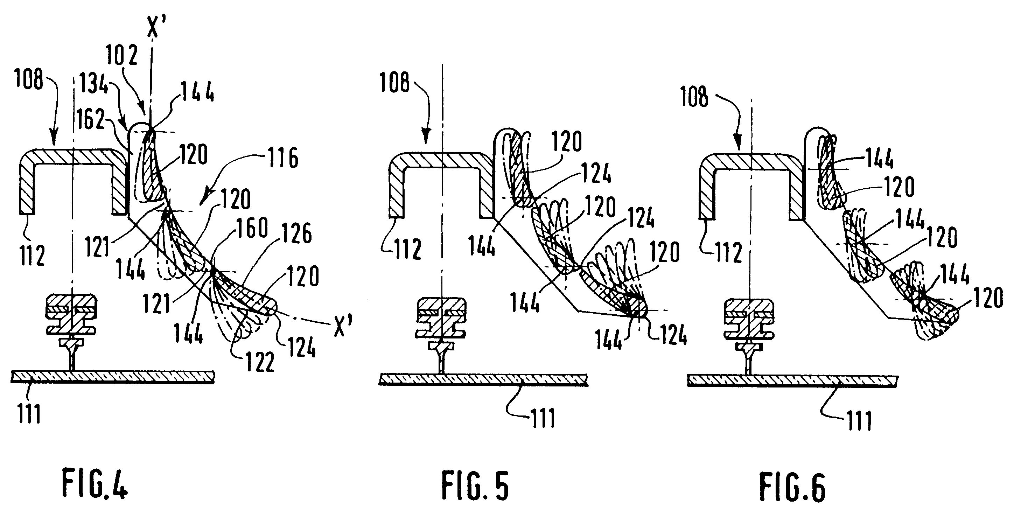

On se réfère maintenant aux figures 4 à 6 qui montrent une variante de réalisation de l'invention qui comportera pour cela les mêmes indices de référence augmentés de l'indice 100.

Sur la figure 4, la partie déflectrice 116 du déflecteur d'air 102 se compose d'une succession d'ailerons 120 suivant une direction X'X' qui est ici de direction courbe en s'étendant longitudinalement tout au long de la direction du balai.

Les ailerons 120 présentent une surface interne courbe 122, une surface externe courbe 126, ces deux surfaces étant reliées par un bord avant 126 et par un bord arrière 160 qui, contrairement aux exemples de la figure 1 à 3, est un bord arrière de forme sensiblement semi-cylindrique en laissant subsister un espace libre 121 entre deux ailerons successifs.

Ces ailerons 120 sont portés par une pièce de support 134 sensiblement en forme de L dont la base verticale 162 du L est fixée par tous moyens à la monture porteuse 108 et plus particulièrement à l'étrier principal 112.

Ainsi, la partie déflectrice présente une surface générale sensiblement courbe en regard du flux d'air apte à venir la frapper en présentant des espaces libres 121 entre le bord arrière d'un aileron et le bord avant d'un aileron qui le précède, ce passage permettant de réduire fortement la traînée de cette partie déflectrice vis-à-vis du flux d'air qui vient la frapper.

Il est prévu que chaque aileron 120 soit articulé en pivotement autour d'un axe 144 de façon à permettre son débattement en fonction des paramètres de fonctionnement du véhicule.

A titre d'exemple, il peut être prévu que l'aileron 120 le plus proche de la surface à essuyer 111 puisse se débattre avec un angle plus grand que l'angle de l'aileron situé à proximité de la monture 108.

Les divers débattements de ces ailerons 120 peuvent être effectués par tous moyens connus tels que des moyens de commande décrits en relation avec les figures 1 à 3.

Les exemples de réalisation des figures 5 et 6 montrent une disposition particulière des axes de pivotement 144 qui, pour la figure 5, sont prévus au niveau du bord 124 avant de chaque aileron 120 et qui dans le cas de la figure 6 sont prévus dans la zone médiane de chaque aileron 120.

## Revendications

1. Déflecteur d'air pour essuie-glace, notamment de véhicule automobile, constitué d'un bras (5) portant à articulation un balai d'essuie-glace (6) apte à essuyer une surface vitrée (11), ledit déflecteur étant constitué d'une partie déflectrice (16) destinée à générer un effet de sol par dépression entre, le déflecteur et la surface vitrée (11) et de moyens de liaison et/ou de fixation (18) sur le balai d'essuie-glace (6) et/ou le bras (5), caractérisé en ce que la partie déflectrice (16) se compose au moins de deux ailerons (20,120) successifs dont l'un au moins est mobile et en ce que les ailerons (20, 120) s'étendent longitudinalement suivant la direction du balai (6) en se faisant suite entre l'extrémité libre de la partie déflectrice et les moyens de liaison et/ou de fixation (18) de manière à faire varier l'effet de sol que génère le déflecteur d'air.

2. Déflecteur d'air selon la revendication 1, caractérisé en ce que les ailerons (20,120) sont tous mobiles.

3. Déflecteur d'air selon la revendication 1 ou 2, caractérisé en ce qu'un espace libre (21,121) sépare deux ailerons (20,120) successifs.

4. Déflecteur d'air selon l'une des revendications précédentes, caractérisé en ce que les ailerons (20) se succèdent selon une direction rectiligne inclinée XX.

5. Déflecteur d'air selon l'une des revendications 1 à 3, caractérisé en ce que les ailerons (120) se succèdent selon une direction courbe X'X'.

6. Déflecteur d'air selon l'une des revendications précédentes, caractérisé en ce que les ailerons (20,120) sont portés par des pièces de support (34,134).

7. Déflecteur d'air selon la revendication 6, caractérisé en ce que les pièces de support (34,134) sont reliées par une traverse (40).

8. Déflecteur d'air selon l'une des revendications précédentes, caractérisé en ce que les ailerons (20) sont mobiles en rotation autour d'un axe longitudinal (44,144).

9. Déflecteur d'air selon l'une des revendications précédentes, caractérisé en ce que les ailerons (20,120) sont commandés en pivotement par un moyen de commande (46) dépendant des paramètres de fonctionnement du moteur.

10. Déflecteur d'air selon la revendication 9, caractérisé en ce que le moyen de commande consiste en une glissière (52) coopérant avec des saillies (48) portées par les ailerons.

## Claims

1. An air deflector for a screen wiper, especially for a motor vehicle, comprising an arm (5) carrying, by means of an articulation, a screen wiper blade (6) adapted to wipe a glazed surface (11), the said deflector comprising a deflecting portion (16) adapted to generate a ground effect through a reduction in pressure between the deflector and the glazed surface (11), and means (18) for attachment and/or fastening onto the screen wiper blade (6) and/or the arm (5), characterised in that the deflecting portion (16) comprises at least two successive ailerons (20, 120), at least one of which is movable, and in that the ailerons (20, 120) extend longitudinally in the direction of the blade (6), in a succession between the free end of the deflecting portion and the attachment and/or fastening means (18), so as to cause the ground effect generated by the air deflector to vary.

2. An air deflector according to Claim 1, characterised in that the ailerons (20, 120) are all movable.

3. An air deflector according to Claim 1 or Claim 2, characterised in that a free space (21, 121) separates two successive ailerons (20, 120).

4. An air deflector according to one of the preceding Claims, characterised in that the ailerons (20, 120) form a succession in an inclined rectilinear direction XX.

5. An air deflector according to one of Claims 1 to 3, characterised in that the ailerons (20, 120) form a succession in a curved direction X'X'.

6. An air deflector according to one of the preceding Claims, characterised in that the ailerons (20, 120) are carried by support members (34, 134).

7. An air deflector according to Claim 6 characterised in that the support members (34, 134) are joined through a stretcher (40).

8. An air deflector according to one of the preceding Claims, characterised in that the ailerons (20) are movable in rotation about a longitudinal axis (44, 144).

9. An air deflector according to one of the preceding Claims, characterised in that the ailerons (20, 120) are controlled in pivoting movement by a control means (46) in dependence on operating parameters of the motor.

10. An air deflector according to Claim 9, characterised in that the control means comprises a slide member (52) cooperating with projections (48) carried by the ailerons.

## Patentansprüche

1. Luftleitblech für Scheibenwischer, insbesondere für Kraftfahrzeuge, bestehend aus einem Scheibenwischerarm (5) mit einem gelenkig daran angebrachten Wischerblatt (6), das über eine Glasfläche (11) wischen kann, wobei das genannte Luftleitblech aus einem Luftleitteil (16) zur Erzeugung eines Bodeneffekts durch Unterdruck zwischen dem Luftleitblech und der Glasfläche (11) und aus Mitteln zur Verbindung und/oder zur Befestigung (18) am Scheibenwischerblatt (6) und/oder am Scheibenwischerarm (8) besteht , **dadurch gekennzeichnet,** daß sich der Luftleitteil (16) aus wenigstens zwei aufeinanderfolgenden Lamellen (20, 120) zusammensetzt, von denen mindestens eine beweglich ist, und daß sich die Lamellen (20, 120) der Länge nach in Richtung des Wischerblatts (6) erstrekken, wobei sie zwischen dem freien Ende des Luftleitteils und den Verbindungs- und/oder Befestigungsmitteln (18) hintereinander angeordnet sind, um den durch das Luftleitblech erzeugten Bodeneffekt zu verändern.

2. Luftleitblech nach Anspruch 1, **dadurch gekennzeichnet,** daß die Lamellen (20, 120) alle beweglich sind.

3. Luftleitblech nach Anspruch 1 oder 2, **dadurch gekennzeichnet,** daß zwei aufeinanderfolgende Lamellen (20, 120) durch einen freien Zwischenraum (21, 121) getrennt sind.

4. Luftleitblech nach einem der vorangehenden Ansprüche , **dadurch gekennzeichnet**, daß die Lamellen (20) in einer geradlinigen geneigten Richtung XX aufeinander folgen.

5. Luftleitblech nach einem der Ansprüche 1 bis 3, **dadurch gekennzeichnet,** daß die Lamellen (120) in einer gekrümmten Richtung X'X' aufeinander folgen.

6. Luftleitblech nach einem der vorangehenden Ansprüche , **dadurch gekennzeichnet,** daß die Lamellen (20, 120) durch Lagerteile (34, 134) gehalten werden.

7. Luftleitblech nach Anspruch 6, **dadurch gekennzeichnet,** daß die Lagerteile (34, 134) durch eine Querstrebe (40) miteinander verbunden sind.

8. Luftleitblech nach einem der vorangehenden Ansprüche , **dadurch gekennzeichnet,** daß die Lamellen (20) drehbeweglich um eine Längsachse (44, 144) sind.

9. Luftleitblech nach einem der vorangehenden Ansprüche **, dadurch gekennzeichnet,** daß die Schwenkbewegung der Lamellen (20, 120) durch ein Betätigungsmittel (46) in Abhängigkeit von den Betriebsparametern des Motors betätigt wird.

10. Luftleitblech nach Anspruch 9, **dadurch gekennzeichnet,** daß das Betätigungsmittel aus einer Gleitführung (52) besteht, die mit an den Lamellen angebrachten Vorsprüngen (48) zusammenwirkt.
